(19) Europäisches Patentamt
European Patent Office
Office européen des brevets

(11) Veröffentlichungsnummer: **0 173 856 B1**

(12) **EUROPÄISCHE PATENTSCHRIFT**

(45) Veröffentlichungstag der Patentschrift: **17.11.88**

(51) Int. Cl.⁴: **C 08 L 69/00**, C 08 K 5/52

(21) Anmeldenummer: **85109533.1**

(22) Anmeldetag: **29.07.85**

(54) **Flammwidrige Polycarbonatformmassen.**

(30) Priorität: **10.08.84 DE 3429481**

(43) Veröffentlichungstag der Anmeldung: **12.03.86 Patentblatt 86/11**

(45) Bekanntmachung des Hinweises auf die Patenterteilung: **17.11.88 Patentblatt 88/46**

(84) Benannte Vertragsstaaten: **DE FR GB IT**

(56) Entgegenhaltungen:
**EP - A - 0 103 231**
**DE - A - 2 228 072**
**DE - A - 2 848 859**
**DE - A - 2 915 563**
**DE - A - 2 918 882**
**US - A - 3 703 495**

**SOVIET INVENTIONS ILLUSTRATED, Sektion Chemie, Woche D 281, 19. August 1981, Zusammenfassung 51018 D 28, A 23, Derwent Publications Ltd., London, GB; & SU - A - 773 054 (SAVINA, M.E.) 23.10.1980**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Sebastian-Kneipp-Weg 2, D-4150 Krefeld (DE)**
Erfinder: **Freitag, Dieter, Dr., Hasenheide 10, D-4150 Krefeld (DE)**
Erfinder: **Kauth, Hermann, Dr., Kolpingstrasse 34, D-4150 Krefeld 11 (DE)**
Erfinder: **Nouvertné, Werner, Dr., Scheiblerstrasse 95, D-4150 Krefeld 1 (DE)**

**EP 0 173 856 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind Polycarbonatformmassen auf Basis von thermoplastischen, halogenfreien, schwefelfreien und phosphorfreien, aromatischen Polycarbonaten, die 50 bis 100 Mol-%, vorzugsweise 75 Mol-% bis 100 Mol-%, insbesondere 90 Mol-% bis 100 Mol-%, und ganz besonders 100 Mol-%, bifunktionelle Struktureinheiten der Formeln (1) und/oder (2) enthalten,

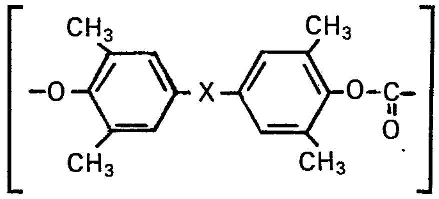

(1)

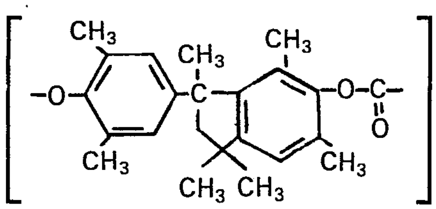

(2)

worin X eine Einfachbindung, ein $C_1$–$C_5$-Alkylen, ein $C_2$–$C_5$-Alkyliden, ein Cyclohexylen, Cyclohexyliden oder ein zweibindiger Rest der Formel

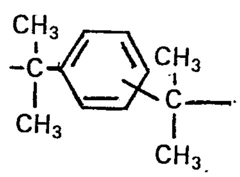

ist,

und 50 bis 0 Mol-%, vorzugsweise 25 Mol-% bis 0 Mol-%, insbesondere 10 Mol-% bis 0 Mol-%, und ganz besonders 0 Mol-%, andere bifunktionelle Struktureinheiten der Formel (3) enthalten,

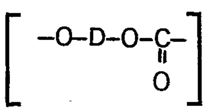

(3)

worin –O–D–O– andere halogenfreie, schwefelfreie und phosphorfreie Diphenolat-Reste als die in den Struktureinheiten (1) und (2) sind, vorzugsweise nur aus C–, H– und O-Atomen aufgebaut sind und/oder vorzugsweise 6 bis 30 C-Atome haben, die dadurch gekennzeichnet sind, dass sie von 1 bis 45 Gew.-%, vorzugsweise von 2 bis 30 Gew.-%, besonders bevorzugt von 3 bis 20 Gew.-% und insbesondere von 5 bis 15 Gew.-%, an aromatischen, halogenfreien und schwefelfreien Phosphatestern der Formel (4)

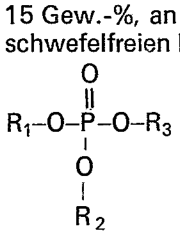

(4)

worin $R_1$, $R_2$ und $R_3$ gleich oder verschieden sind und $C_1$–$C_{20}$ Kohlenwasserstoffreste sind, wobei mindestens zwei der Reste $R_1$, $R_2$ und $R_3$ substituierte oder unsubstituierte Arylreste sind, und 0,01 bis 5 Gew.-%, vorzugsweise 0,02 bis 2 Gew.-%, besonders bevorzugt 0,04 bis 1 Gew.-% und ganz besonders bevorzugt 0,05 bis 0,5 Gew.-%, an Tetrafluorethylenpolymerisaten enthalten, wobei sich die Angaben Gew.-% jeweils auf das Gesamtgewicht Polycarbonat + Phosphatester + Tetrafluorethylenpolymerisat beziehen.

Die erfindungsgemässen Formmassen haben beachtliche flammwidrige Eigenschaften, ermittelt in bekannter Weise nach UL-Subject 94 oder nach dem $O_2$-Index gemäss ASTM-D-2863-A-Typ A.

Bekannt ist der Zusatz von Phosphorsäuremonoarylestern, Phosphorsäurediarylestern, Phosphorsäuretrialkylestern und Partialestern von Polyphosphorsäuren zu Polycarbonaten, um diese gegen hydrolytischen Abbau zu stabilisieren. Die hydrolytisch stabilen Polycarbonate auf Basis der Struktureinheiten der Formeln (1) und (2) und die Phosphatester der Formel (4) sind im US-Patent 3 404 122 nicht involviert. Aus dem US-Patent 3 186 961 ist bekannt, Triarylphosphate Polycarbonaten als Weichmacher zuzusetzen. Hier sind die hydrolytisch stabilen Polycarbonate gemäss vorliegender Erfindung auch nicht involviert.

Bekannt ist, die Schmelzviskosität von Polycarbonaten durch Zusätze von Polytetrafluorethylen zu erhöhen (siehe US-Patent 3 005 795 und GB 938 931). Um derartige Polycarbonatmassen flammwidrig einzustellen, bedarf es beispielsweise der Einführung von Halogen in das Polycarbonat (siehe DE-PS 2 211 826), gegebenenfalls in Kombination mit Erdalkalicarbonaten (US-Patent 3 651 174), oder des Zusatzes von organischen Alkali- oder Erdalkalisalzen (siehe US-Patent 4 391 935 und DE-OS 2 948 439) oder von Antimonoxid (siehe DE-OS 2 400 044) oder des Zusatzes von anorganischen Alkalisalzen (siehe DE-OS 2 800 923) oder des Zusatzes von anorganischen Alkalisalzen und der Einführung von Halogen in das Polycarbonat (siehe Jap.-Patent Publikation Nr. 49–88 944 und US-Patent 4 208 489).

Gemäss DE-OS 2 705 219 werden halogenhaltige Polycarbonate durch spezielle Phosphatesterzusätze thermisch und hydrolytisch stabilisiert. Die Polycarbonate können neben halogenierten Bisphenolen zwar auch tetraalkylierte Diphenole einkondensiert enthalten; gemäss der Lehre der DE-OS 2 705 219 wird jedoch durch die Präsenz des Halogens Flammwidrigkeit erzeugt und besitzen die Phosphatester eine andere Struktur, als die von uns eingesetzten. So enthalten sie beispielsweise aromatische OH-Gruppen.

Gemäss US-Patent 3 671 487 werden glasfaserverstärkte thermoplastische Polyester auf der Basis von Glykolen und Iso- bzw. Terephthalsäure mit flammwidrigen Additiven, wie Phosphatestern, und Polytetrafluorethylenen versetzt.

Aromatische, thermoplastische Polycarbonate werden von der Anmeldung nicht umfasst. Dies liegt auch nicht nahe, da die genannten Polyester im Gegensatz zu den amorphen Polycarbonaten teilkristalline Thermoplaste mit völlig anderen Eigenschaften sind.

Gemäss der DE-OS 2 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können, welcher die Entflammungshemmung auf Grund eines synergistischen Effekts mit der Bromverbindung zu steigern scheint. Als Polycarbonate kommen auch solche aus tetraalkylierten Diphenolen in Betracht. Der alleinige Zusatz von 10 Gew.-Teilen Triphenylphosphat zu Bisphenol-A-Polycarbonat hat allerdings keine Antitropfwirkung gemäss Entflammungstest U.L. Subj. 94 (siehe Seite 20 der DE-OS 2 228 072; siehe dazu auch Seite 10 der DE-OS).

Gemäss DE-OS 2 434 085 sind verschäumbare Polycarbonatformmassen bekannt, die als Flammschutzmittel Phosphatester enthalten können, gegebenenfalls in Kombination mit Halogenverbindungen. Als Halogenverbindungen sind keine Polytetrafluorethylenpolymerisate empfohlen und als Polycarbonate auch nicht die gemäss vorliegender Erfindung geeigneten.

Gemäss DE-OS 2 921 325 ist der Zusatz von Pentaerythritdiphosphaten als Flammschutzmittel für Polycarbonate beschrieben, wobei zusätzlich Halogenverbindungen mitverwendet werden können, wobei dies gemäss Seite 9 der DE-OS 2 921 325 aus der zitierten US-Patentschrift 33 92 136 auch Polyvinylidenfluoride sein können; als Polycarbonate sind die gemäss vorliegender Erfindung geeigneten nicht beschrieben. Auch sind die verwendeten Pentaerythritdiphosphate strukturell von den Phosphaten der Formel (4) verschieden.

Gemäss der DE-OS 3 002 985 sind Mischungen aus speziellen Polyesterkombinationen mit Pfropfpolymeren und aromatischen Polycarbonaten beschrieben; diese Mischungen können noch flammhemmende Mittel enthalten. Als flammhemmende Mittel sind Phosphorverbindungen genannt sowie Halogenverbindungen. Tropfhemmende Mittel können ausserdem zugesetzt werden (Seite 12 der DE-OS). Als Polycarbonate sind nur indirekt über die zitierte US-Patentschrift 4 034 016 solche von alkylierten Diphenolen beschrieben; als Halogenverbindungen sind Polytetrafluorethylenpolymerisate nicht angesprochen.

Aus der DE-OS 2 918 882 sind Formmassen aus Polycarbonaten, Halogenverbindungen, Alkali- oder Erdalkalisalze und fluorierten Polyolefinen bekannt, die als zusätzliches thermoplastisches Harz Polycarbonate aus tetralkylierten Diphenolen in Mengen bis zu 10 Gew.-%, bezogen auf Gesamtmischung, enthalten.

Gemäss EP-OS 0 103 231 (Le A 21 841) werden die Polycarbonate gemäss vorliegender Erfindung mit Polyphosphaten flammwidrig ausgerüstet, die ein $\overline{M}w$ (Gewichtsmittelmolekulargewicht) von 1600 bis 150 000 haben können. Zusätzlich kann Polytetrafluorethylen mitverwendet werden. Die Polyphosphate sind jedoch strukturell von den Phosphaten der Formel (4) verschieden.

Gemäss US-Patent 3 703 495 ist Triphenylphosphat für das Bisphenol-A Polycarbonat K eingesetzt. Flammschutz ist jedoch nicht ausgewiesen, vielmehr wird ausgeführt, dass ein negativer Einfluss auf die Kerbschlagzähigkeit da ist, (siehe Spalte 4, Zeilen 17 bis 25 und Tabelle 2 Beispiel K von US-Patent 3 703 495). Aus der Lehre der US-Patentschrift 3 703 495 geht somit nicht hervor, dass Phosphatester wie Triphenylphosphat eine flammwidrige Wirkung für Bisphenol-A Polycarbonat haben.

Gegenstand der vorliegenden Erfindung sind somit auch Polycarbonatformmassen, die dadurch gekennzeichnet sind, dass sie aus den erfindungsgemässen Polycarbonaten mit Struktureinheiten (1) und/oder (2) und gegebenenfalls (3) und 1 bis 45 Gew.-%, vorzugsweise 2 bis 30 Gew.-%, besonders bevorzugt 3 bis 20 Gew.-% und insbesondere 5 bis 15 Gew.-%, bezogen auf Gesamtgewicht aus Polycarbonat + Phosphatester, an halogenfreien und schwefelfreien Phosphatestern der Formel (4) bestehen.

Die erfindungsgemäss einsetzbaren Polycarbonate können in bekannter weise durch den Einbau von halogenfreien, schwefelfreien und phosphorfreien Verzweigern verzweigt sein.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm Mengen an verseifbarem Chlor (weniger als 100 ppm, bevorzugt weniger als 25 ppm), resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbaren Chlor sind halogenfreie Polycarbonate im Sinne vorliegender Erfindung. Entsprechendes gilt für schwefelfreie beziehungsweise phosphorfreie Polycarbonate; S- oder P-haltige Verunreinigungen, resultierend beispielsweise aus der Aufarbeitung des Polycarbonats, würden nicht mitzählen.

Die Herstellung der erfindungsgemäss einsetzbaren Polycarbonate ist bekannt und beispielsweise in den Deutschen Offenlegungschriften Nr. 2 211 957 und Nr. 2 615 038 beschrieben.

Der Struktureinheit (1) zugrundeliegende Diphenole der Formel (5)

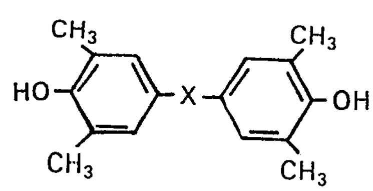

(5)

sind beispielsweise:

Bis-(3,5-dimethyl-4-hydroxyphenyl),

Bis-(3,5-dimethyl-4-hydroxyphenyl)-methan,

1,1-Bis-(3,5-dimethyl-4-hydroxyphenyl)-ethan,

2,2-Bis-(3,5-dimethyl-4-hydroxyphenyl)-propan,

1,1-Bis-(3,5-dimethyl-4-hydroxyphenyl)-2-methyl-propan,

2,2-Bis-(3,5-dimethyl-4-hydroxyphenyl)-butan,

2,4-Bis-(3,5-dimethyl-4-hydroxyphenyl)-2-methylbutan,

1,1-Bis-(3,5-dimethyl-4-hydroxyphenyl)-cyclohexan und α,α'-Bis-(3,5-dimethyl-4-hydroxyphenyl)-p-diisopropylbenzol.

Bevorzugte Diphenole der Formel (5) sind:

2,2-Bis-(3,5-dimethyl-4-hydroxyphenyl)-methan und 2,2-Bis-(3,5-dimethyl-4-hydroxyphenyl)-propan, wobei letzteres insbesondere auch als Rohbisphenol, wie es nach den Verfahren der DOS 2 928 464 und der DOS 2 928 443 aus reinem 2,6-Dimethylphenol und aus insbesondere mit Kresolen verunreinigtem technischem 2,6-Dimethylphenol hergestellt werden kann, eingesetzt werden kann. Derartige Rohbisphenole müssen jedoch mindestens 80 Gew.-%, bevorzugt mindestens 90 Gew.-% 2,2-Bis-(3,5-dimethyl-4-hydroxyphenyl)-propan enthalten.

Das besonders bevorzugte Diphenol der Formel (5) ist das Bis-(3,5-dimethyl-4-hydroxyphenyl)-methan.

Das der Strukturreinheit (2) zugrundeliegende Diphenol (6)

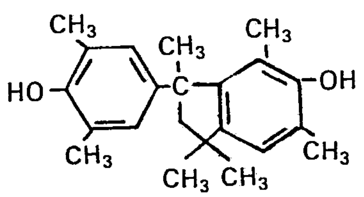

(6)

ist ebenfalls ein bevorzugtes Diphenol.

Der Struktureinheit (3) zugrundeliegende Diphenole der Formel (7)

HO–D–OH (7)

sind beispielsweise:

Resorcin, Dihydrodiphenyle, Bis-(hydroxyphenyl)-alkane, Bis-(hydroxyphenyl)-cycloalkane, Bis-(hydroxyphenyl)-ether, Bis-(hydroxyphenyl)-ketone und α,α'-Bis-(hydroxyphenyl)-diisopropylbenzole.

Derartige Diphenole sind beispielsweise in der Monographie «Hermenn Schnell, Chemistry and Physics of Polycarbonates», New York, Interscience Publishers, 1964, Polymer Reviews, Vol. 9, beschrieben.

Bevorzugte Diphenole der Formel (7) sind beispielsweise

Bis-(4-hydroxyphenyl),

1,1-Bis-(4-hydroxyphenyl)-cyclohexan,

2,2-Bis-(4-hydroxyphenyl)-propan,

Bis-(hydroxyphenyl)-methan (auch Isomerengemische), 2,2-Bis-(3-methyl-4-hydroxyphenyl)-propan und α,α'-Bis-(4-hydroxyphenyl)-p-diisopropylbenzol.

Besonders bevorzugte Diphenole der Formel (7) sind beispielsweise 2,2-Bis-(4-hydroxyphenyl)-propan und Bis-(4-hydroxyphenyl)-methan.

Die erfindungsgemäss einsetzbaren Polycarbonate weisen im allgemeinen Molekulargewichte $\overline{M}_w$ (Gewichtsmittel, z.B. bestimmt nach der Lichtstreumethode) von 10.000–200.000, bevorzugt von 20.000–80.000, besonders bevorzugt von 25.000–60.000 und ganz besonders bevorzugt von 30.000–45.000 auf.

In den erfindungsgemäss einsetzbaren Phosphatestern der Formel (4)

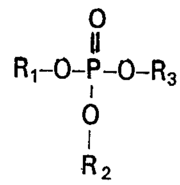

(4)

sind $R_1$, $R_2$ und $R_3$ gleich oder verschieden und $C_1$–$C_{20}$-Kohlenwasserstoffreste, wobei mindestens zwei der Reste $R_1$, $R_2$ und $R_3$ substituierte oder unsubstituierte Arylreste sind.

Bevorzugte Kohlenwasserstoffreste sind solche mit 2 bis 16 C-Atomen, insbesondere solche mit 6 bis 10 C-Atomen. Bevorzugte Arylreste sind ebenfalls solche mit 6 bis 10 C-Atomen.

Geeignete Kohlenwasserstoffreste sind Alkyl-, Cycloalkyl- und Aralkyl-Reste. Unsubstituierte Arylreste sind beispielsweise Phenyl und Naphthyl. Substituierte Arylreste sind Alkaryl-, Cycloalkaryl-, arylsubstituierte Alkaryl- und arylsubstituierte Aryl-Reste.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Beispiele für Alkarylreste sind o-, p- und m-Tolyl, 2,6- und 2,5-Dimethylphenyl, Trimethylphenyl, o-, p- und m-Isopropylphenyl, Nonylphenyl, p-tert.-Butylphenyl, 2,4-Diisopropylphenyl und Triisopropylphenyl.

Ein Beispiel für einen Cycloalkarylrest ist o-Cyclohexylphenyl. Beispiele für arylsubstituierte Alkarylreste sind p-Benzylphenyl und p-Phenethylphenyl.

Ein Beispiel für ein arylsubstituiertes Aryl ist Diphenyl.

Bevorzugte Reste sind Phenyl, o-, m-, p-Tolyl und 2,6-Dimethylphenyl, 2,4-Diisopropylphenyl und Triisopropylphenyl.

Bevorzugte Phosphatester der Formel (4) sind solche, wo die Reste $R_1$, $R_2$ und $R_3$ Aryl-Reste Alkaryl-Reste sind.

Beispiele für die erfindungsgemäss einsetzbaren aromatischen Phosphate der Formel (4) sind Bis-(phenyl)- methylphosphat, Bis-(phenyl)-ethylphosphat, Bis-(phenyl)-butylphosphat, Bis-(4-methylphenyl)- 2-ethylhexylphosphat, Bis-(phenyl)-2-ethylhexylphosphat, Bis-(phenyl)-octylphosphat, Bis-(phenyl)-isodecylphosphat, Tris-(phenyl)-phosphat, Tris-(2-methylphenyl)-phosphat, Tris-(3-methylphenyl)-phosphat, Tris-(4-methylphenyl)-phosphat, Tris-(2,6-dimethylphenyl)-phosphat, Tris-(isopropylphenyl)-phosphat, Tris-(nonylphenyl)-phosphat, Bis-(phenyl)-2-methylphenylphosphat, Bis-(phenyl-4-methylphenylphosphat, Bis-(phenyl)-isopropylphenylphosphat, Bis-(phenyl)-2,6-dimethylphenylphosphat, Bis-(2-methylphenyl)-phenylphosphat, Bis-(4-methylphenyl)-phenylphosphat, Bis-(isopropylphenyl)-phenylphosphat, Bis-(2,6-dimethylphenyl)-phenylphosphat, Bis-(2,6-dimethylphenyl)- 4-tertiär- butylphenylphosphat, Bis-(2,6-dimethylphenyl)-4-methylphenylphosphat, Bis-(2,6-dimethylphenyl)-3-methylphenylphosphat, Bis-(2,6-dimethylphenyl)- 4-isopropylphenylphosphat und Bis-(2,6-dimethylphenyl)-2-isopropylphenylphosphat.

Bevorzugte Phosphate der Formel (4) sind Tris-(phenyl)-phosphat, Tris-(methylphenyl)-phosphat, Tris-(2,6-dimethylphenyl)- phosphat, Bis-(phenyl)-methylphenylphosphat, Bis-(methylphenyl)-phenylphosphat, Bis-(2,6-dimethylphenyl)-phenylphosphat und Bis-(2,6-dimethylphenyl)-methylphenylphosphat.

Besonders bevorzugte Phosphate der Formel (4) sind Tris-(phenyl)-phosphat, Tris-(methylphenyl)-phosphat, und Bis-(phenyl)-methylphenylphosphat.

Erfindungsgemäss einsetzbare Tetrafluorethylenpolymerisate sind Polymere mit Fluorgehalten von 65 bis 76 Gew.-%, vorzugsweise 70 bis 76 Gew.-%. Beispiele sind Polytetrafluorethylen, Tetrafluorethylen- Hexafluorpropylen- Copolymere oder Tetrafluorethylencopolymerisate mit geringen Mengen fluorfreier copolymerisierbarer ethylenisch ungesättigter Monomerer. Bevorzugt wird Polytetrafluorethylen eingesetzt. Die Polymerisate sind bekannt. Sie können in feinteiliger Form, gewöhnlich als Pulver, verwendet werden. Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/$cm^2$ und bei Temperaturen von 0 bis 200 °C, vorzugsweise bei Temperaturen von 20 bis 100 °C. (Nähere Einzelheiten siehe beispielsweise US-Patent 2 393 967).

Die erfindungsgemäss geeigneten Polytetrafluorethylene sollen vorzugsweise Gewichtsmittelmolekulargewichte $\overline{M}w$ zwischen $10^5$ und $10^6$ haben.

Die Herstellung der erfindungsgemässen Polycarbonatformmassen kann in bekannter Weise erfolgen.

So können beispielsweise die Komponenten auf einem Doppelwellenextruder über die Schmelze gemischt werden. Weiterhin können die Komponenten mit Ausnahme der Tetrafluorethylenpolymerisate über ihre Lösungen gemischt werden und anschliessend das Lösemittel wieder entfernt werden, z.B. über einen Doppelwellenausdampfextruder durch Ausdampfen über die Schmelze oder auch nur einfach durch Abdunsten. Ersteres Verfahren, bei dem im Extruder auch Polytetrafluorethylen zugeführt werden kann, ist z.B. geeignet für die Herstellung von Granulaten, Fäden, Folien und Platten. Nach dem zweiten Verfahren können z.B. dünne Folien hergestellt werden, eine gleichmässige Verteilung eventuell zugesetzten Polytetrafluorethylens ist aber wegen dessen Unlöslichkeit etwas schwieriger.

Die erfindungsgemässen flammwidrigen, thermoplastischen Polycarbonatformmassen zeigen ein gutes Eigenschaftsbild. Die zu ihrer Herstellung erfindungsgemäss einsetzbaren Polycarbonate sind im allgemeinen einphasig mit den erfindungsgemäss einsetzbaren aromatischen Phosphaten mischbar und ergeben transparente Mischungen, die bei Zusatz von Polytetrafluorethylen transluzent werden können. Auch bei grösserem Gehalt an aromatischem Phosphat werden die erfindungsgemässen flammwidrigen Mischungen nicht klebrig und zeigen eine glänzende Oberfläche hoher Güte. Sie zeigen auch keine Kristallisationstendenz des Polycarbonats oder des aromatischen Phosphats, sodass sich die erzielte Transparenz oder Transluzenz der Mischungen auch nach langer Lagerzeit, auch bei höherer Temperatur, nicht durch sich bildende kristalline Anteile verringert. Infolgedessen verändern sich auch die anderen Eigenschaften der Mischungen, wie z.B. die mechanischen, nicht durch die Bildung kristalliner Anteile, und sind die Mischungen problemlos auf üblichem Wege thermoplastisch zu verarbeiten.

Weiterhin sind die erfindungsgemässen Polycarbonatformmassen bei Einsatz reiner Ausgangskomponenten, die technisch leicht realisierbar sind, farblos. Besonders herausragend ist ihre hohe Flammwidrigkeit, was sich bei verschiedenen Brandtests insbesondere in kurzen Brennzeiten und geringer Abtropfneigung zeigt. Sie entwickeln naturgemäss bei einem Brand keine ätzenden, korrosiven HCl- oder HBr-Gase und spalten keine Phenole ab. Ausserdem weisen sie hohe Wärmestandfestigkeiten und gute mechanische Eigenschaften auf. Ihre Fliessnahtfestigkeit ist hervorragend. Sie sind sehr hydrolysefest.

In organischen Lösemitteln sind sie gut löslich (ausser dem Anteil an Polytetrafluorethylenpolymerisat), wobei die Lösungen ohne die Tetrafluorethylenpolymerisate im allgemeinen einphasig sind.

Bei der thermoplastischen Verarbeitung weisen sie, auch schon bei relativ niedriger Verarbeitungstemperatur, eine hohe Fliessfähigkeit auf. Sie sind sehr verarbeitungsstabil, auch bei hoher Verarbeitungstemperatur. Weiterhin ist ihre Licht- und Witterungsstabilität hoch.

Die guten Eigenschaften der erfindungsgemässen flammwidrigen, thermoplastischen Polycarbonatformmassen waren nicht zu erwarten. So zeigen beispielsweise entsprechende Polycarbonatformmassen, die Homopolycarbonate aus 2,2-Bis-(4-hydroxyphenyl)-propan anstelle der erfindungsgemässen enthalten, schlechte Verträglichkeit des Polycarbonats mit den erfindungsgemäss einzusetzenden Phosphaten auf und haben somit ein schlechteres Eigenschaftsbild als die erfindungsgemässen Polycarbonatformmassen aus den speziellen Polycarbonaten und den aromatischen Phosphaten.

Die Summe der guten Eigenschaften macht die erfindungsgemässen Polycarbonatformmassen zu einem geeigneten Material für die Flammwidrigausrüstung von teilweise oder ganz aus Thermoplasten bestehenden Gebrauchsgegenständen.

Gegenstand der vorliegenden Erfindung ist somit auch die Verwendung der erfindungsgemässen Polycarbonatformmassen als Flammschutzmittel zur Herstellung von flammwidrig auszurüstenden Gegenständen aus thermoplastischen Kunststoffen.

Die erfindungsgemäss als Flammschutzmittel verwendbaren Polycarbonatformmassen können noch Füllstoffe, wie Mineralien oder Russ, Verstärkungsstoffe, wie Glasfasern oder Kohlefasern, Stabilisatoren wie UV-, Oxidations- und Thermostabilisatoren, Entformungsmittel, Farbstoffe und/oder Pigmente und/oder andere übliche Zusatzstoffe enthalten.

Die erfindungsgemäss als Flammschutzmittel verwendbaren Polycarbonatformmassen sind überall dort einsetzbar, wo der Einsatz von flammwidrigen thermoplastischen Kunststoffen, insbesondere von flammwidrigen thermoplastischen Polycarbonaten gefordert ist, also beispielsweise im Gerätesektor, im Elektro- und Elektronikbereich, im Installations- und Heizungsbereich sowie auf dem Verkehrssektor.

Beispiele für den Einsatz der flammwidrigen Polycarbonatformmassen sind Kaffeemaschinen, Elektroherde, Grillgeräte, Bügeleisen, Waschmaschinen, Filmgeräte, Diaprojektoren, Verkabelungen, Telefonanlagen, Fernschreibanlagen, Kabelfernsehanlagen, Elektromotoren, Klimaanlagen, Rechenanlagen, Beleuchtungsanlagen, elektrische Installationen im Wohn- und Industriebereich, Radiogeräte, Fernsehgeräte, Plattenspieler, Videorecorder, Automobile und Flugzeuge.

Einige spezielle Beispiele für die erfindungsgemässe Verwendung der Polycarbonatformmassen sind Aschenbecher in Automobilen, Speisetabletts in Flugzeugen, Instrumententräger in Automobilen, Lampenhalterungen, Träger elektrischer und elektronischer Bauteile in verschiedensten Geräten sowie Abdeckungen für Sicherungselemente und Stromschalter in elektrischen Anlagen.

Beispiel 1

Mischungen aus 2,2-Bis-(3,5-dimethyl-4-hydroxyphenyl)- propan- Polycarbonat (MPC) und Triphenylphosphat (TPP)

2,2-Bis-(3,5-dimethyl-4-hydroxyphenyl)-propan-Polycarbonat der relativen Viskosität $\eta$ rel = 1,295, gemessen in $CH_2Cl_2$ bei c=5 g/l, wurde in einem Doppelwellenextruder mit verschiedenen Anteilen Triphenylphosphat bei ca. 280 °C über die Schmelze gemischt. Die abgezogenen Stränge der Mischungen wurden granuliert und der Spritzgussverarbeitung zu Prüfkörpern unterworfen. Es zeigte sich, dass die Fliessfähigkeit der Schmelze durch den Triphenylphosphatzusatz stark erhöht wird. Es zeigte sich weiter, dass die Prüfkörper einphasig und transparent sind. Nach 300 Tagen Lagerung bei Raumtemperatur sind die Prüfkörper unverändert, zeigen also keine Kristallisationstendenz. Die an den Prüfkörpern gemessenen $O_2$-Indices zeigen, dass die Flammwidrigkeit des Polycarbonats durch den Triphenylphosphatzusatz stark erhöht wird (s. Tabelle 1).

Tabelle 1
Eigenschaften von MPC/TPP-Mischungen

| Beispiel 1 | Mischungsbestand-Teile % | | Flammwidrigkeit |
|---|---|---|---|
| | MPC | TPP | $O_2$-Index % |
| a | 100 | 0 | 24,5 |
| b | 97,5 | 2,5 | 33 |
| c | 95 | 5 | 36,5 |
| d | 90 | 10 | 39 |

Beispiel 2

Mischungen aus MPC, TPP und Polytetrafluorethylen (PTFE)

MPC, wie in Beispiel 1 beschrieben, wurde in einem Doppelwellenextruder bei ca. 280 °C mit verschiedenen Anteilen Triphenylphosphat und PTFE (Hostaflon TF 2026 der Hoechst AG) über die Schnecke gemischt. Die abgezogenen Stränge der Mischungen wurden granuliert und im Spritzguss zu Prüfkörpern verarbeitet. Das PTFE führte zu einer geringen Trübung der Prüfkörper im Vergleich zu den Prüfkörpern des Beispiels 1, eine Trübung durch Kristallisation des Polycarbonats oder durch Entmischung des Triphenylphosphats trat auch nach 300 Tagen Lagerung bei Raumtemperatur nicht auf. Die hohe Fliessfähigkeit und hohe Flammwidrigkeit der Mischungen, die an den Prüfkörpern gemessen wurden zeigt Tabelle 2. Aus Tabelle 2 ist zu entnehmen (UL-Teste), dass überraschenderweise durch den PTFE-Zusatz die Nachbrennzeiten drastisch herabgesetzt werden, während PTFE bei anderen Polymeren im allgemeinen nur die Abtropfneigung geschmolzenen Materials verringert. Die Brandzeit wird dagegen im allgemeinen kaum verringert, sondern oft sogar erhöht, eine Folge des verringerten Abtropfens. Es liegt also ein synergistischer Effekt zwischen den MPC/TPP und PTFE vor.

Tabelle 2
Eigenschaften von Mischungen aus MPC, TPP und PTFE

| Bsp. 2 | Mischungsbestandteile % | | | $O_2$-Index % | Flammwidrigkeit UL-Subj. 94, Brandklasse bei Prüfkörperdicke | | | Fliessfähigkeit Fliessspirale 0,2×0,8 cm Länge [cm] bei [ °C] | | |
|---|---|---|---|---|---|---|---|---|---|---|
| | MPC | TPP | PTFE | | 3,2 mm | 1,6 mm | 0,8 mm | 280 | 30 | 320 |
| a | 100 | – | – | 24,5 | n.b. | n.b. | n.b. | – | – | – |
| b | 99,8 | – | 0,2 | 25,5 | n.b. | – | – | 14,2 | 25,7 | 40,1 |
| c | | | | | */166/>60 | | | | | |
| d | 95 | 5 | – | 36,5 | n.b. | n.b. | – | – | – | – |
| e | | | | | 130/121/58 | 157/138/43 | | – | – | – |
| f | 97,3 | 2,5 | 0,2 | 33 | V–O | V–I | – | – | – | – |
| | | | | | 32/40/9 | 56/20/10 | | – | – | – |
| | 94,8 | 5 | 0,2 | 39 | – | V–O | V–O | 28,3 | 42,2 | 56,8 |
| | | | | | | 12/11/2 | 25/18/8 | | | |
| | 89,8 | 10 | 0,2 | 41 | – | – | V–O | 43,2 | 59,8 | 77,6 |
| | | | | | | | 10/10/1 | | | |

V–O = beste Einstufung, V–1 = zweitbeste Einstufung im UL-Test
n.b. = nicht bestandener UL-Test
* = Prüfkörper zum Teil durchgebrannt
Die drei Zahlen ../../.. im UL-Test geben an:
ε der 10 Brennzeiten (5 Prüfkörper 1.+2. Beflammen) der 2 Tage bei 23 °C gelagerten Prüfkörper/
ε der 10 Brennzeiten der 7 Tage bei 70 °C gelagerten Prüfkörper (5 Prüfkörper, 1.+2. Beflammen)/
grösster Wert Einzelbrennzeit; alles in sec.

Beispiel 3

Mischungen aus einem Copolycarbonat, das als Bisphenolkomponente 75 Mol-% 2,2-Bis-(3,5-dimethyl-4-hydroxyphenyl)-methan (TMBPF) und 25 Mol-% 2,2-Bis-(3,5-dimethyl-4-hydroxyphenyl)-propan (TMBPA) einkondensiert enthält (FPC), TPP und PTFE

Ein TMBPF/TMBPA-Copolycarbonat 75/25 Molteile (FPC) der relativen Viskosität η rel = 1,293, gemessen in $CH_2Cl_2$ bei c=5 g/l, wird über die Schmelze mit Triphenylphosphat und PTFE (Hostaflon TF 2026 der Hoechst AG) gemischt, wie in Beispiel 2 beschrieben. Die aus dem Material hergestellten Prüfkörper verhalten sich in Bezug auf Trübung und Kristallisation ebenso günstig, wie die entsprechenden Mischungen mit MPC der Beispiele 1 und 2. Aus Tabelle 3 ist zu entnehmen, dass das in sich schon recht flammwidrige FPC durch den Phosphatzusatz noch weiter verbessert wird und dass auch hier, wie schon in Beispiel 2 beim MPC gezeigt, durch zusätzliches PTFE die Brennzeiten noch weiter verkürzt werden. Der in Beispiel 2 beschriebene synergistische Effekt zwischen der Polycarbonatkomponente, der Phosphatkomponente und des PTFE tritt also auch hier auf.

Tabelle 3
Eigenschaften von Mischungen aus einem Copolycarbonat, das als Bisphenolkomponente 75 Mol-% 2,2-Bis-(3,5-dimethyl-4-hydroxyphenyl)-methan (TMBPF) und 25 Mol-% 2,2-Bis-(3,5-dimethyl-4-hydroxyphenyl)-propan (TMBPA) einkondensiert enthäl (FPC), TPP und PTFE.

| Bsp. 3 | Mischungsbestandteile % | | | Flammwidrigkeit | | |
|---|---|---|---|---|---|---|
| | FPC | TPP | PTFE | $O_2$-Index % | UL Subj. 94, Brandklasse bei Prüfkörperdicke 1,6 mm | 0,8 mm |
| a | 100 | – | – | 37 | V–O 27/33/7 | V–O 36/29/7 |
| b | 95 | 5 | – | 44,5 | V–O 12/12/2 | V–O 16/16/3 |
| c | 94,8 | 5 | 0,2 | 45,5 | V–O 10/10/1 | V–O 10/10/1 |

Die 3 Zahlen ../../.. im UL-Test geben an:
ε der 10 Brennzeiten (5 Prüfkörper, 1.+2. Beflammen) der 2 Tage bei 23 °C gelagerten Prüfkörper
ε der 10 Brennzeiten der 7 Tage bei 70 °C gelagerten Prüfkörper/ grösster Wert
Einzelbrennzeit; alles in sec
V–0 = beste Einstufung im UL-Test

Beispiel 4

Folien aus MPC und verschiedenen organischen Phosphaten

Über die $CH_2Cl_2$-Lösung wurde MPC, wie in Bsp. 1 beschrieben, mit verschiedenen organischen Phosphaten vermischt und zwar mit Triphenylphosphat, Trikresylphosphat, Diphenylkresylphosphat und Diphenyloctylphosphat in jeweils zwei Verhältnissen, MPC/Phosphat gleich 80/20 und 60/40. Die hergestellten 8 Lösungen, die alle einphasig waren, wurden zu ca. 100 µm starken Folien (nach Trocknung) vergossen. Alle Folien waren transparent, nicht klebend, hochglänzend, einphasig und zäh. Auch nach 300 Tagen Lagerung der Folien bei Raumtemperatur ist keine Kristallisation oder Entmischung festzustellen, die Folien sind unverändert. Bei der Prüfung der Flammwidrigkeit der Folien wurde nach dem Beflammen ein ausserordentlich schnelles Verlöschen der Folien festgestellt. So lag z.B. bei den Folien mit 40% der oben genannten Phosphate die Verlöschenszeit bei weniger als 1 sec. Eine Vergleichsfolie aus MPC allein verlöschte nach dem Beflammen nicht, sondern verbrannte völlig.

Das Beispiel zeigt, dass auch bei hohen Anteilen der erfindungsgemässen Phosphate im erfindungsgemässen Polycarbonat keine Kritallisation oder Entmischung der beiden Komponenten bzw. einer der Komponenten stattfindet und dass Mischungen mit hervorragenden Eigenschaften entstehen.

## Patentansprüche

1. Polycarbonatformmassen auf Basis von thermoplastischen, halogenfreien schwefelfreien und phosphorfreien, aromatischen Polycarbonaten, die 50 bis 100 Mol-% bifunktionelle Struktureinheiten der Formeln (1) und/oder (2) enthalten,

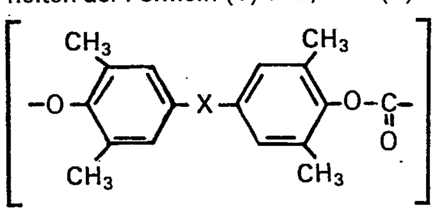
(1)

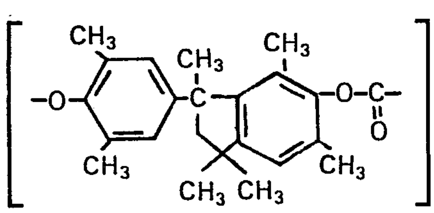
(2)

worin X eine Einfachbindung, ein $C_1$–$C_5$-Alkylen, ein $C_2$–$C_5$-Alkyliden, ein Cyclohexylen, Cyclohexyliden oder ein zweibindiger Rest der Formel

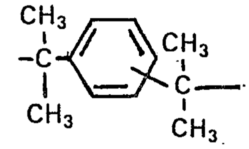
ist, und

50 bis 0 Mol-% andere bifunktionelle Struktureinheiten der Formel (3) enthalten

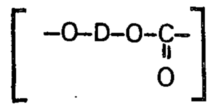
(3)

worin –O–D–O– andere halogenfreie, schwefelfreie und phosphorfreie Diphenolat-Reste als die in den Struktureinheiten (1) und (2) sind, dadurch gekennzeichnet, dass sie 1 bis 45 Gew.-% an aromatischen, halogenfreien und schwefelfreien Phosphatestern der Formel (4),

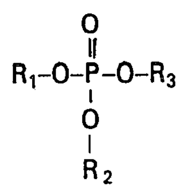
(4)

worin $R_1$, $R_2$ und $R_3$ gleich oder verschieden sind und $C_1$–$C_{20}$ Kohlenwasserstoffreste sind, wobei mindestens zwei der Reste $R_1$, $R_2$ und $R_3$ substituierte oder unsubstituierte Arylreste sind, und 0,01 bis 5 Gew.-% an Tetrafluorethylenpolymerisaten enthalten, wobei sich die Angaben Gew.-% jeweils auf das Gesamtgewicht Polycarbonat + Phosphatester + Tetrafluorethylenpolymerisat beziehen.

2. Polycarbonatformmassen gemäss Anspruch 1, dadurch gekennzeichnet, dass der Gehalt an Phosphatestern 2 bis 30 Gew.-% beträgt.

3. Polycarbonatformmassen gemäss Anspruch 1, dadurch gekennzeichnet, dass der Gehalt an Phosphatestern 3 bis 20 Gew.-% beträgt.

4. Polycarbonatformmassen gemäss Ansprüchen 1 bis 3, dadurch gekennzeichnet, dass sie einen Gehalt an Tetrafluorethylenpolymerisaten von 0,02 bis 2 Gew.-% haben.

5. Polycarbonatformmassen gemäss Anspruch 4, dadurch gekennzeichnet, dass sie einen Gehalt an Tetrafluorethylenpolymerisaten von 0,04 bis 1 Gew.-% haben.

6. Polycarbonatformmassen, dadurch gekennzeichnet, dass sie aus den Polycarbonaten des Anspruchs 1 und 1 bis 45 Gew.-%, bezogen auf Gesamtgewicht aus Polycarbonat + Phosphatester, an Phosphatestern des Anspruchs 1 bestehen.

7. Polycarbonatformmassen gemäss Anspruch

6, dadurch gekennzeichnet, dass der Gehalt an Phosphatestern 2 bis 30 Gew.-% beträgt.

8. Polycarbonatformmassen gemäss Anspruch 6, dadurch gekennzeichnet, dass der Gehalt an Phosphatestern 3 bis 20 Gew.-% beträgt.

9. Polycarbonatformmassen gemäss Ansprüche 6 bis 8, dadurch gekennzeichnet, dass sie noch aus mindestens einer der Komponenten, ausgewählt aus Füllstoffen, Verstärkungsstoffen, Stabilisatoren, Entformungsmitteln, Farbstoffen und Pigmenten, bestehen.

10. Verwendung der Polycarbonatformmassen der Ansprüche 1 bis 9 als Flammschutzmittel zur Herstellung von flammwidrig auszurüstenden Gegenständen aus thermoplastischen Kunststoffen.

**Revendications**

1. Compositions à mouler à base de polycarbonates aromatiques thermoplastiques dépourvus d'halogènes, de soufre et de phosphore, qui contiennent 50 à 100 moles % de motifs structuraux bifonctionnels de formule (1) et/ou (2),

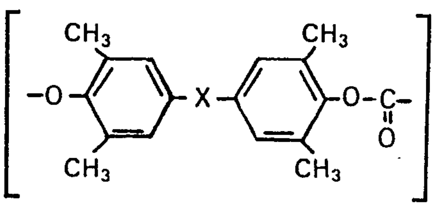
(1)

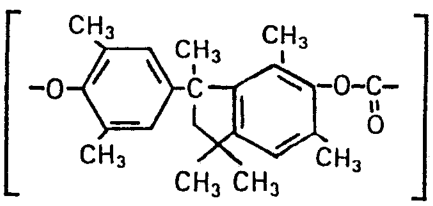
(2)

dans lesquelles X est une liaison simple, un groupe alkylène en $C_1$ à $C_5$, un groupe alkylidène en $C_2$ à $C_5$, un groupe cyclohexylène, un groupe cyclohexylidène ou un reste divalent de formule

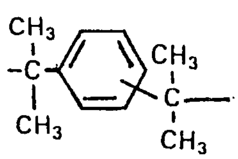

et

50 à 0 mole% d'autres motifs structuraux bifonctionnels de formule (3),

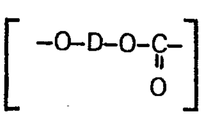
(3)

où –O–D–O– désigne des restes diphénolate dépourvus d'halogènes, de soufre et de phosphore autres que ceux qui sont présents dans les motifs structuraux (1) et (2), caractérisées en ce qu'elles contiennent 1 à 45% en poids d'esters phosphoriques aromatiques dépourvus d'halogènes et de soufre, de formule (4)

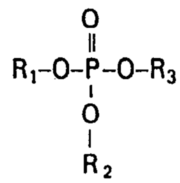
(4)

dans laquelle $R_1$, $R_2$ et $R_3$ sont identiques ou différents et représentent des restes hydrocarbonés en $C_1$ à $C_{20}$, deux au moins des restes $R_1$, $R_2$ et $R_3$ étant des restes aryle substitués ou non substitués, et 0,01 à 5% en poids de polymérisats de tétraéthyléne, les indications en pourcent en poids se rapportant dans chaque cas au poids total polycarbonate + ester phosphorique + polymérisat de tétrafluoréthylène.

2. Compositions à mouler à base de polycarbonates suivant la revendication 1, caractérisées en ce que la teneur en esters phosphoriques a une valeur de 2 à 30% en poids.

3. Compositions à mouler à base de polycarbonates suivant la revendication 1, caractérisées en ce que la teneur en esters phosphoriques va de 3 à 20 % en poids.

4. Compositions à mouler à base de polycarbonates suivant les revendications 1 à 3, caractérisées en ce qu'elles ont une teneur en polymérisats de tétrafluoréthylène de 0,02 à 2 % en poids.

5. Compositions à mouler à base de polycarbonates suivant la revendication 4, caractérisées en ce qu'elles ont une teneur en polymérisats de tétrafluoréthyleène de 0,04 à 1 % en poids.

6. Compositions à mouler à base de polycarbonates, caractèrisées en ce qu'elles sont constituées des polycarbonates suivant la revendication 1 et 1 à 45 % en poids, par rapport au poids total polycarbonate + ester phosphorique, d'esters phosphoriques suivant la revendication 1.

7. Compositions à mouler à base de polycarbonates suivant la revendication 6, caractérisées en ce que la teneur en esters phosphoriques a une valeur 2 à 30 % en poids.

8. Compositions à mouler à base de polycarbonates suivant la revendication 6, caractérisées en ce que la teneur en esters phosphoriques a une valeur de 3 à 20 % en poids.

9. Compositions à mouler à base de polycarbonates suivant les revendications 6 à 8, caractérisées en ce qu'elles sont encore constituées d'au moins l'un des composants choisis entre des charges, des substances de renforcement, des agents stabilisants, des agents de démoulage, des colorants et des pigments.

10. Utilisation des compositions à mouler à base de polycarbonates suivant les revendications 1 à 9 comme retardateurs de flamme pour la production d'objects ignifugés en matières thermoplastiques.

**Claims**

1. Polycarbonate moulding compositions based on thermoplastic, halogen-free, sulphur-free and phosphorus-free aromatic polycarbonates, which contain 50 to 100 mol% of bifunctional structural units of the formulae (1) and/or (2)

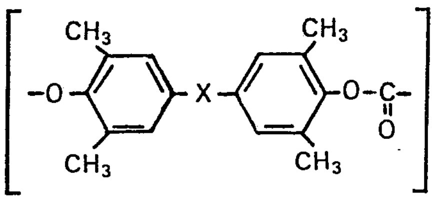

(1)

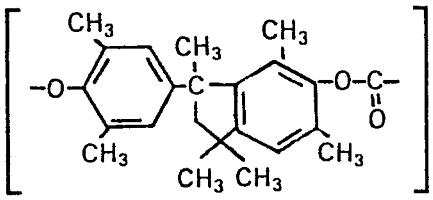

(2)

wherein

X is a single bond, $C_1$–$C_5$-alkylene, $C_2$–$C_5$-alkylidene, cyclohexylene, cyclohexylidene or a divalent radical of the formula

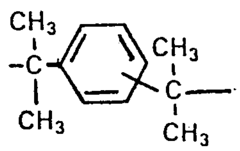

and contain 50 to 0 mol% of other bifunctional structural units of the formula (3)

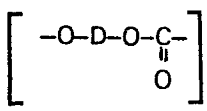

(3)

wherein

–O–D–O– are other halogen-free, sulphur-free and phosphorus-free diphenolate radicals than those in structural units (1) and (2), characterised in that they contain from 1 to 45% by weight of aromatic, halogen-free and sulphur-free phosphate esters of the formula (4)

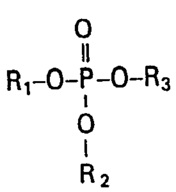

(4)

wherein

$R_1$, $R_2$ and $R_3$ are identical or different and are $C_1$–$C_{20}$ hydrocarbon radicals, at least two of the radicals $R_1$, $R_2$ and $R_3$ being substituted or unsubstituted aryl radicals, and 0.01 to 5% by weight of tetrafluoroethylene polymers, the % by weight data in each case relating to the total weight of polycarbonate + phosphate ester + tetrafluoroethylene polymer.

2. (Polycarbonate moulding compositions according to Claim 1, characterised in that the content of phosphateesters is 2 to 30% by weight.

3. Polycarbonate moulding compositions according to Claim 1, characterised in that the content of phosphate esters is 3 to 20% by weight.

4. Polycarbonate moulding compositions according to Claims 1 to 3, characterised in that they contain 0.02 to 2% by weight of tetrafluoroethylene polymers.

5. Polycarbonate moulding compositions according to Claim 4, characterised in that they contain 0.04 to 1% by weight of tetrafluoroethylene polymers.

6. Polycarbonate moulding compositions, characterised in that they consist of the polycarbonates of Claim 1 and 1 to 45% by weight, based on the total weight of polycarbonate + phosphate ester, of phosphate esters of Claim 1.

7. Polycarbonate moulding compositions according to Claim 6, characterised in that the content of phosphate esters in 2 to 30% by weight.

8. Polycarbonate moulding compositions according to Claim 6, characterised in that the content of phosphate esters is 3 to 20% by weight.

9. Polycarbonate moulding compositions according to Claims 6 to 8, characterised in that they also consist of at least one of the components selected from fillers, reinforcing substances, stabilisers, mould release agents, dyestuffs and pigments.

10. Use of the polycarbonate moulding compositions of Claims 1 to 9 as flameproofing agents for the production of thermoplastic articles to be provided with a flame-repellent finish.